# EUROPÄISCHE PATENTSCHRIFT

(11) **EP 1 611 792 B1**
(45) Veröffentlichungstag und Bekanntmachung des Hinweises auf die Patenterteilung: **04.04.2007**
(21) Anmeldenummer: 05013358.6
(22) Anmeldetag: 21.06.2005
(51) Int. Cl.: A22C 13/00

(54) **Vorrichtung zum Herstellen von Folienschlauch aus einem Folienband**
Apparatus for manufacturing a tubular film from a film tape
Dispositif de fabrication d'une feuille tubulaire à partir d'un film en bande

(30) Priorität: 02.07.2004 DE 102004032183
(43) Veröffentlichungstag der Anmeldung: 04.01.2006
(73) Patentinhaber: Poly-clip System GmbH & Co. KG, 60489 Frankfurt am Main (DE)
(72) Erfinder: Nicoley, Wolfgang, 55252 Mainz Kastell (DE); Frey, Edmund, 35435 Wettenberg (DE); Hanten, Jürgen, 61231 Bad Nauheim (DE)
(74) Vertreter: Eisenführ, Speiser & Partner

(56) Entgegenhaltungen:
- EP-A- 0 908 103
- DE-A1- 10 221 198
- DE-A1- 19 517 127
- US-A1- 2003 224 715
- US-B1- 6 669 545

## Beschreibung

Die Erfindung betrifft eine Vorrichtung zum Herstellen von mit flüssigem, viskosem oder granularem Füllgut befüllbarem Folienschlauch aus einem Folienband mit einem an eine Füllmaschine anschließbaren Füllrohr, einer das Füllrohr umgebenden Umformeinrichtung zum Umformen des Folienbandes zu einem Folienschlauch, einer in Füllausstoßrichtung hinter der Umformeinrichtung angeordneten Siegeleinrichtung zum Versiegeln von nach der Umformung benachbarten Längskanten des Folienbandes, einem Vorschubantrieb für den Folienschlauch und einer Messeinrichtung zum Bestimmen einer Vorratsmenge an von der Siegeleinrichtung abgegebenem Folienschlauch.

Aus der DE 10221198 A1 ist eine Vorrichtung zum Herstellen von Wursten bekannt, wobei zwei Sensoren zur Bestimmung des Zeitpunkts zum Wechseln der Hülle angeordnet sind. Der erste erfaßt die Position des dem Außenrand des Füllrohres gegenüberliegenden Endes. Der zweite ermittelt, wann der Wursthülenschieber eine vorgegebene Position erreicht hat.

Es ist weiterhin bekannt, die für die Produktion von Würsten oder ähnlichen Portionspackungen benötigte Schlauchhülle an Ort und Stelle durch Längsnahtversiegeln eines in Schlauchform umgeformten Folienbandes kontinuierlich oder intermittierend mittels einer solchen Vorrichtung herzustellen. Unter Siegeln ist hierbei jede Art des (unlösbaren) Verbindens der beiden Längskanten zu verstehen, worunter beispielsweise das Schweißen als bevorzugtes Siegelverfahren aber auch das Kleben oder dgl. fällt. Bei dem aus der EP 0 908 103 A1 bekannten gattungsbildenden Verfahren wird das Folienband von dem im Bereich oder in Transport- bzw. Füllstoßausrichtung hinter der Siegeleinrichtung angeordneten Vorschubantrieb über eine entsprechenden Umformeinrichtung (Formschulter) und durch die Siegel- oder Schweißeinrichtung gezogen. Die Formschulter umgibt das Füllrohr und formt das Folienband um das Füllrohr herum der Gestalt um, dass dessen Längskanten entweder auf Stoß oder überlappend aneinander angrenzen. Diese Längskanten werden in der sich anschließenden Schweiß- bzw. Siegelvorrichtung direkt oder mittels eines die Kanten verbindenden Siegelbandes miteinander verbunden.

Der auf diese Weise gebildete Folienschlauch wird von den Vorschubantrieben weiter in Füllausstoßrichtung in einen Pufferabschnitt auf dem Füllrohr gefördert, in der er sich harmonikaartig zu einem Vorrat faltet. Ein Vorrat ist notwendig, da der Abfüllvorgang intermittierend und der Siegelvorgang in den meisten Fällen kontinuierlich, in einigen Fällen auch intermittierend, jedenfalls aber langsamer als das durch den Füllausstoß während des Abfüllvorgangs bedingte Abziehen des Folienschlauches von dem Füllrohr erfolgt. Andererseits entstehen nach dem Abfüllen während des Verschließens der Enden des befüllten Folienschlauches mittels einer sog. Clipmaschine Pausen. Daher wird der Folienschlauch auch während der Clippausen (Füllerstillstand), in denen der Abfüllvorgang angehalten ist, weiterproduziert. Der Folienschlauchvorrat staut sich dabei vor einem Rückhaltemittel an.

Um eine Synchronisation zwischen der Folienschlauchherstellung und dem Abfüllvorgang zu erzielen, wird die Folienschlauchherstellung bekanntermaßen geregelt. Dazu kommt die eingangs erwähnte Messeinrichtung zum Bestimmen einer Vorratsmenge des Folienschlauch zum Einsatz, die typischerweise aus einem gegenüber dem Füllrohr beweglichen und einem ortsfesten Sensorelement besteht. Das bewegliche Sensorelement ist mit einem in den Querschnitt des gefalteten oder gerafften Folienschlauches eingreifenden Mitnehmer verbunden, der zugleich das Rückhaltemittel für den Folienschlauchvorrat bildet. Wird der Vorrat vergrößert, so verschiebt dieser den Mitnehmer und das bewegliche Sensorelement in Förderrichtung der Vorschubantriebe gegen eine Rückstellkraft, die beispielsweise von einer Feder (Federkraft) oder einem pneumatischen Element (Druckkraft) aufgebracht wird. Wird Folienschlauch von dem Vorrat abgezogen und dieser somit verkleinert, dann treibt die Rückstellkraft den Mitnehmer mit dem beweglichen Sensorelement gegen die Förderrichtung zurück.

In der einfachsten Ausgestaltung der Messeinrichtung weist das feste Sensorelement beispielsweise zwei beabstandete mechanische oder magnetische Schalter oder Signalgeber auf, die jeweils bei Annäherung des beweglichen Sensorelements (mechanische oder berührungslose Kontaktfläche) betätigt werden. Die Schalter lösen dabei ein Ab- bzw. Einschalten der Vorrichtung bei einer durch eine entsprechende Relativanordnung der Schalter/Signalgeber und Kontaktflächen ausgewählten, voreingestellten maximalen bzw. minimalen Vorratsmenge aus.

Eine weiterentwickelte Messeinrichtung sieht eine Wegmessung zwischen dem beweglichen und dem ortsfesten Sensorelement vor, deren Resultat eine differenziertere Anpassung der Siegel- und Fördergeschwindigkeit an die Vorratsmenge erlaubt.

In jedem Fall aber wird das bewegliche Sensorelement durch den in den Querschnitt des gerafften Folienschlauches eingreifenden Mitnehmer transportiert. Dies setzt jeweils eine ausreichende Faltung des Vorrats voraus, an der der Mitnehmer angreift. Nun gibt es jedoch Folien mit Beschichtungen, welche durch starke Faltungen Schaden nehmen. Beispielweise sind Folien mit einer Aluminiumbeschichtung empfindlich gegen scharfe Knicke, da die relativ spröde Aluminiumschicht an solchen Stellen reißen kann, wodurch sowohl die funktionalen als auch die ästhetischen Eigenschaften der Folie beeinträchtigt werden. Dasselbe gilt für steife Folienmaterialien, die nach scharfen Umformungen nicht mehr vollständig geglättet werden können und somit eine irreversible, unerwünscht wellige Struktur beibehalten. Ferner tritt das Problem auf, dass die Falten der nach dem Versiegeln noch heißen Folie bei zu großem Staudruck während der Vorratsbildung aneinander klebt.

Aufgabe der vorliegenden Erfindung ist es, eine Vorrichtung zum Herstellen von Folienschlauch aus einem Folienband zu schaffen, die diese Nachteile überwindet.

Diese Aufgabe wird durch eine Vorrichtung der eingangs genannten Art gelöst, deren Messeinrichtung einen ersten Sensor, der die Länge des von der Siegeleinrichtung an den Folienschlauchvorrat abgegebenen Folienschlauches erfasst, und einen zweiten Sensor umfasst, der die Länge des von dem Folienschlauchvorrat in Füllausstoßrichtung abgezogenen Folienschlauches erfasst.

Der Folienschlauchvorrat bildet sich abhängig vom Folienmaterial typischerweise aufgrund mangelnder Eigenstabilität unter Faltenbildung direkt hinter den Vorschubantrieben. Es kann aufgrund der erfindungsgemäßen Messeinrichtung jedoch eine starke Faltenbildung vermieden werden, weil bei der Bestimmung des Folienschlauchvorrats auf den Eingriff eines mit Rückstellkraft gegen die Vorschubrichtungen wirkenden Mitnehmers verzichtet wird. Die Bestimmung des Vorrats ist überdies präziser, da dieser nicht mehr über die (zufällige) Faltung bei der Vorratsbildung sondern durch Längenmessung und Differenzbildung mittels geeigneter Signalverarbeitungsmittel zwischen der Länge des dem Folienschlauchvorrat zugeführten und des von diesem abgezogenen Folienschlauches ermittelt wird. Hierdurch kann mittels einer geeigneten Regelung die Siegel- und Fördergeschwindigkeit noch genauer an die jeweiligen Bedingungen (Abfüllgeschwindigkeit, -takt und dgl.) angepasst werden, was wiederum eine konstantere und letztendlich auch geringere Vorratshaltung ermöglicht und damit weiter zur Vermeidung von starker Faltung des Folienschlauches beiträgt. Weil es bei der erfindungsgemäßen Vorrichtung gerade nicht auf die Stärke der Faltung ankommt, kann diese unter Berücksichtigung der Empfindlichkeit des Folienmaterials und der für den einwandfreien Abfüllbetrieb benötigten minimalen Vorratsmenge bei vorgegebener Länge der Pufferstrecke durch eine exakte Einstellung der Regelung verringert werden. Während bei den bekannten Messeinrichtungen die Vorratsmenge in Abhängigkeit von der Steifheit der Folie variieren konnte, so dass bei Folienwechsel jeweils eine genaue Einstellung der Messeinrichtung zu erfolgen hatte, kann mit der erfindungsgemäßen Vorrichtung unabhängig von dem verwendeten Folienmaterial und ohne weitere Einstellmaßnahmen stets eine gleichbleibende Vorratsmenge und damit ein prozesssicherer Herstellungs- und Abfüllvorgang gewährleistet werden.

In einer besonders bevorzugten Ausführungsform ist auf dem Füllrohr in Füllausstoßrichtung hinter dem Vorschubantrieb ein Rückhaltering angeordnet und so eingerichtet, dass der zwischen dem Vorschubantrieb und dem Rückhaltering aufgestaute Folienschlauchvorrat beim Abziehen des Folienschlauches in Füllausstoßrichtung zurückgehalten wird.

Der Rückhaltering hat typischerweise einen Außendurchmesser, der so an den Innendurchmesser des fertigen Folienschlauches angepasst ist, dass dieser aufgrund mangelnder Eigenstabilität zwar nicht von dem Vorschubantrieb über den Rückhaltering hinweggeschoben, jedoch beim Abfüllvorgang bedingt durch den Füllausstoß über den Rückhaltering von dem Puffervorrat abgezogen werden kann. Insbesondere wird dabei der Folienschlauchvorrat aufgrund seines undefinierten Innendurchmessers zurückgehalten oder aus anderer Sicht der Folienschlauch beim Abziehen über den Rückhaltering gestreckt. Bei der Anpassung des Außendurchmessers spielen verschiedene Faktoren wie Reibungskoeffizienten zwischen dem Folien- und dem Rückhalteringmaterial, Elastizität der Folie und des Rückhalterings und dgl. eine Rolle. Der Rückhaltering lässt sich bei Bedarf auf einfache Weise auswechseln. Insbesondere lässt sich der Rückhaltering auch auf einfache Weise auf dem zylindrischen Füllrohr verschieben und arretieren, wodurch die Länge der Pufferstrecke verändert werden kann.

Der zweite Sensor kann in Füllausstoßrichtung in Höhe des Rückhaltering oder dahinter angeordnet sein, da an der Stelle des Rückhaltering und dahinter die Folie durch das Abziehen von dem Vorrat wieder gestreckt ist. Bevorzugt ist der zweite Sensor jedoch in Höhe des Rückhalterings angeordnet. Dies hat insbesondere bei Verwendung eines an dem Folienschlauch anliegenden Sensors den Vorteil, dass der Rückhaltering zugleich als Gegendruckstück dient.

Sowohl der erste als auch der zweite Sensor der Messeinrichtung kann auf verschiedene Weise realisiert werden.

Gemäß einer weiteren vorteilhaften Ausgestaltung weist der erste und/oder zweite Sensor eine in Füllausstoßrichtung vor bzw. hinter dem Folienschlauchvorrat an dem Folienschlauch bzw. dem Folienband anliegende Rolle und einen Drehzahlaufnehmer auf, der eingerichtet ist die Drehung der jeweils anliegenden Rolle zu erfassen. Diese Form des Wegaufnehmers - nachfolgend auch als Zählrad bezeichnet - zeichnet sich durch ihre konstruktive Einfachheit und geringe Kosten aus.

Der erste Sensor weist in weiteren vorteilhaften Ausführungsformen einen Drehzahlaufnehmer auf, der eingerichtet ist, die Drehung entweder einer das Folienband bevorratenden oder einer dieses umlenkenden Rolle zu erfassen. Streng genommen wird nicht die Länge des an den Folienschlauchvorrat abgegebenen Folienschlauchs sondern die des von dem Folienbandrollenvorrat abgezogenen Folienbands gemessen. Dies erfolgt durch Aufnahme der Drehzahl bzw. Winkelstellung der Umlenkrolle mit bekanntem Umfang oder der Drehzahl bzw. Winkelstellung der Vorratsrolle und anschließende Berechnung unter Berücksichtigung des Umfangs - in letzterem Fall unter Berücksichtigung eines sich verändernden Umfangs.

Bevorzugt weist der erste Sensor einen Drehzahlaufnehmer auf, der eingerichtet ist, einen Vorschubweg des Vorschubantriebs zu erfassen. In diesem Fall findet eine Messung der Drehzahl bzw. Winkelstellung des Vorschubantriebs statt, welcher bekanntermaßen ein im Bereich des Füllrohres an dem bereits umgeformten Folienschlauch reibschlüssig anliegendes, angetriebenes Transportband oder eine Transportrolle aufweist. Für den Antrieb des Transportbands/der Transportrolle werden üblicherweise Schrittmotoren verwendet. Der Drehzahlaufnehmer bzw. der erste Sensor wird daher vorzugsweise durch elektronische Signalverarbeitungsmittel realisiert, die die Impulse der Schrittmotorsteuerung abgreifen und bei bekanntem Umfang des Antriebsbandes bzw. der Antriebsrolle in den Vorschubweg umrechnen.

Während bei den vorgenannten Ausführungsbeispielen das Folienband bzw. der Folienschlauch unter direktem Kontakt mit dem Sensor oder eines den Sensor einschließenden Transportmittels für das Folienband bzw. den Folienschlauch (Vorrats-, Umlenk- oder Antriebsrolle) abgetastet wird, ist der erste und/oder zweite Sensor in einem anderen vorteilhaften Ausführungsbeispiel in Füllausstoßrichtung vor bzw. hinter dem Folienschlauchvorrat, benachbart zu dem Folienschlauch bzw. dem Folienband angeordnet und eingerichtet, Strukturen auf der Oberfläche des Folienbandes oder Folienschlauches berührungsfrei abzutasten.

Solche Strukturen sind bei einigen Folien beispielweise in Form eines Gewebes oder dgl. originär vorhanden. Andernfalls können speziell für den Verwendungszweck der Längenmessung aufgeprägt oder aufgedruckt sein. Das Aufdrucken oder -prägen kann "in-line" parallel zum Siegeln erfolgen. Als Sensor bietet sich bevorzugt ein optischer Sensor (beispielsweise eine CCD-Kamera oder ein Laserabtastsensor) an. Alternativ kann auch ein akustischer Sensor verwendet werden. Solche berührungsfreien Sensoren haben allgemein den Vorteil, dass kein Schlupf zwischen dem Sensor bzw. Transportmittel und dem Folienband bzw. dem Folienschlauch auftreten kann.

Weitere Aufgaben, Merkmale und Vorteile der vorliegenden Erfindung werden nun anhand der im Folgenden beschriebenen Ausführungsbeispielen unter Bezugnahme auf die zugehörigen Figuren beschrieben. Es zeigen:
- Fig. 1: schematische Darstellung eines Ausführungsbeispiel der erfindungsgemäßen Vorrichtung zum Herstellen von Folienschlauch in der Seitenansicht und
- Fig. 2: das Ausführungsbeispiel gemäß Fig. 1 in der Draufsicht.

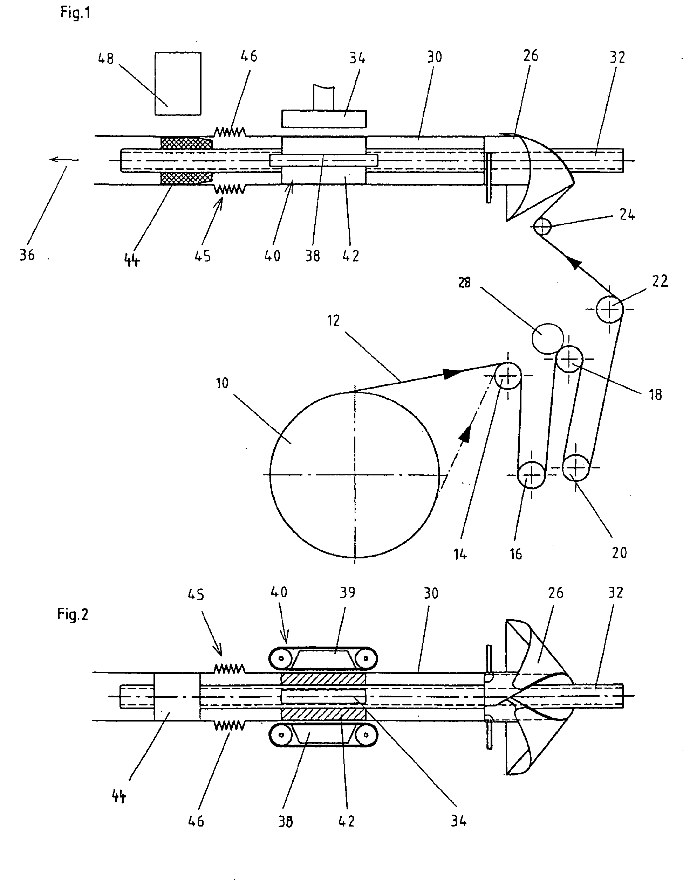

Die Vorrichtung gemäß Fig. 1 weist eine Vorratsrolle 10 eines zur Verarbeitung anstehenden Folienbandes 12 auf. Das Folienband 12 wird über mehrere Umlenkrollen 14, 16, 18, 20, 22 und 24 an eine Formschulter 26 herangeführt. Im Bereich einer der Umlenkrollen 18 liegt eine Zählrad 28 auf der der Umlenkrolle 18 gegenüberliegenden Oberfläche an dem Folienband 12. an. Die Umlenkrolle 18 bildet also die Andruckrolle für das Zählrad 28.

Das Folienband wird in der Formschulter 26 zu einem Folienschlauch 30 um ein Füllrohr 32 herum umgeformt. Dabei umgibt der Folienschlauch 30 das Füllrohr 32 im Wesentlichen koaxial. Der Folienschlauch weist nach der Umformung zwei, gemäß der Ansicht in Fig. 1 oben liegende, jedoch nicht dargestellte, benachbarte Längskanten auf, die in einer der Formschulter 26 in Füllausstoßrichtung (vgl. Pfeil 36) stromabwärts angeordneten Siegelstation 34 versiegelt bzw. verschweißt werden. In gleicher Höhe mit der Siegelstation 34 befindet sich beiderseits des Füllrohres jeweils ein auf der Außenseite des Folienschlauchs 30 anliegender Antriebsriemen 38, 39 eines Vorschubantriebs 40, der Folienband nach- und unter Siegelstation hindurchzieht und gleichzeitig den fertigen Folienschlauch in Füllausstoßrichtung 36 schiebt. Im Bereich der Siegelstation 34 und des Vorschubantriebs 40 ist koaxial auf dem Füllrohr 32 ein Ring 42 angeordnet, dessen Außendurchmesser in etwa dem Durchmesser des fertigen Folienschlauchs 30 entspricht. Unter Andruck gegen diesen Ring 42 wirken sowohl die Antriebsriemen 38, 39 als auch Siegelstation 34 (genauer ein Siegelbalken, Siegelband oder Heißluftstrom der Siegelstation).

Stromabwärts der Siegelstation 34 befindet sich koaxial auf dem Füllrohr 32 ein Rückhaltering 44. Da der Vorschubantrieb 40 in Vorschubrichtung vor dem Rückhaltering 44 wirkt und der Folienschlauch keine ausreichende Eigenstabilität aufweist, bildet sich ein ziehharmonikaartig gefalteter Folienschlauchvorrat 46 auf einer Pufferstrecke 45 zwischen dem Rückhaltering 44 und dem Vorschubantrieb 40. Weil es bei der erfindungsgemäßen Vorrichtung jedoch nicht auf die Stärke der Faltung ankommt, kann diese beispielsweise unter Berücksichtigung der Empfindlichkeit des Folienmaterials durch eine entsprechende Wahl der Länge der Pufferstrecke 45 bei gleicher Vorratskapazität oder bei vorgegebener Länge der Pufferstrecke 45 durch eine Reduzierung der Vorratsmenge verringert werden.

Der Folienschlauch 30 wird dann beim Abfüllvorgang in Füllausstoßrichtung 36 über den Rückhaltering von dem Puffervorrat abgezogen. In Höhe des Rückhalterings 44 oder in Füllausstoßrichtung 36 dahinter, d.h. an der Stelle, an der die Folie durch das Abziehen von dem Vorrat 46 wieder gestreckt ist, befindet sich ein zweiter Sensor 48 der Messeinrichtung. Dieser Sensor 48 kann ebenfalls wie der erste Sensor 28 als ein an der Außenseite des Folienschlauches beispielsweise im Bereich des Rückhalterings 44 als Gegendruckstück anliegendes Zählrad ausgestaltet sein.

Nachfolgend wird das Herstellungsverfahren von mit flüssigem, viskosem oder granularem Füllgut befüllbarem Folienschlauch aus einem Folienband mittels der erfindungsgemäßen Vorrichtung beschrieben. In einem ersten Schritt wird das Folienband 12 von einem Folienbandvorrat 10 der Umformeinrichtung 26 zugeführt. Das Folienband 12 wird in der Umformeinrichtung 26 zu einem Folienschlauch 30 um ein Füllrohr 32 herum umgeformt und danach in einer Schweiß- oder Siegeleinrichtung 34 der nach der Umformung überlappenden oder nebeneinanderliegenden Längskanten mit oder ohne Verwendung eines zusätzlichen Siegelstreifens zu dem geschlossenen Folienschlauch 30 verschweißt oder versiegelt. Des versiegelte Folienschlauch 30 wird danach mittels eines Vorschubantriebs 40 von der Siegeleinrichtung 34 an einen Folienschlauchvorrat 46 auf dem Füllrohr 32 abgegeben, von dem er durch den Füllvorgang bedingt bei Bedarf wieder abgezogen wird, wobei die Länge des an den Folienschlauchvorrat 46 abgegebenen und die Länge des von dem Folienschlauchvorrat 46 abgezogenen Folienschlauchs 30 erfasst und einer (elektronischen) Regelung zugeführt wird, die den Siegelvorgang bzw. die Siegelgeschwindigkeit so regelt, dass eine vorbestimmte, möglichst gleichbleibende Vorratsmenge an Folienschlauch bereitgehalten wird.

Bei Betriebsbeginn oder Folienbandwechsel muss zunächst eine bestimmte Menge Folienschlauch vorgesiegelt werden, damit ein einwandfreier Anlauf der Gesamtanlage (Siegelvorrichtung und Clipmaschine) gewährleistet ist. Diese bestimmte Menge kann dann durch die erfindungsgemäße Messung und Regelung der Siegelgeschwindigkeit beibehalten werden.

## Patentansprüche

1. Vorrichtung zum Herstellen von mit flüssigem, viskosem oder granularem Füllgut befüllbarem Folienschlauch aus einem Folienband (12), mit einem an eine Füllmaschine anschließbaren Füllrohr (32), einer das Füllrohr (32) umgebenden Umformeinrichtung zum Umformen des Folienbandes zu einem Folienschlauch (30), einer in Füllausstoßrichtung (36) hinter der Umformeinrichtung angeordneten Siegeleinrichtung (34) zum Versiegeln von nach der Umformung benachbarten Längskanten des Folienbandes (12), einem Vorschubantrieb (40) für den Folienschlauch (30) und einer Messeinrichtung zum Bestimmen eines Vorrats (46) an von der Siegeleinrichtung (34) abgegebenem Folienschlauch (30),
**dadurch gekennzeichnet, dass** die Messeinrichtung einen ersten Sensor, der die Länge des von der Siegeleinrichtung (34) an den Folienschlauchvorrat (46) abgegebenen Folienschlauches (30) erfasst, und einen zweiten Sensor (48) umfasst, der die Länge des von dem Folienschlauchvorrat (46) in Füllausstoßrichtung (36) abgezogenen Folienschlauches (30) erfasst.

2. Vorrichtung nach Anspruch 1,
**dadurch gekennzeichnet, dass** auf dem Füllrohr in Füllausstoßrichtung (36) hinter dem Vorschubantrieb (40) ein Rückhaltering (44) angeordnet und so eingerichtet ist, dass der zwischen dem Vorschubantrieb (40) und dem Rückhaltering (44) aufgestaute Folienschlauchvorrat (46) beim Abziehen des Folienschlauches (30) in Füllausstoßrichtung (36) zurückgehalten wird.

3. Vorrichtung nach Anspruch 1 oder 2,
**dadurch gekennzeichnet, dass** der erste Sensor eine in Füllausstoßrichtung (36) vor dem Folienschlauchvorrat (46) an dem Folienschlauch (30) oder dem Folienband (12) anliegende Rolle (28) und einen Drehwinkelaufnehmer aufweist, der eingerichtet ist die Drehung der anliegenden Rolle (28) zu erfassen.

4. Vorrichtung nach Anspruch 1 oder 2,
**dadurch gekennzeichnet, dass** der erste Sensor einen Drehwinkelaufnehmer aufweist, der eingerichtet ist, die Drehung einer das Folienband (12) bevorratenden Rolle (10) zu erfassen.

5. Vorrichtung nach Anspruch 1 oder 2,
**dadurch gekennzeichnet, dass** der erste Sensor einen Drehwinkelaufnehmer aufweist, der eingerichtet ist, die Drehung einer das Folienband (12) umlenkenden Rolle (14, 16, 18, 20, 22, 24) zu erfassen.

6. Vorrichtung nach Anspruch 1 oder 2,
**dadurch gekennzeichnet, dass** der erste Sensor einen Drehwinkelaufnehmer aufweist, der eingerichtet ist, einen Vorschubweg des Vorschubantriebs (40) zu erfassen.

7. Vorrichtung nach Anspruch 1 oder 2,
**dadurch gekennzeichnet, dass** der erste Sensor in Füllausstoßrichtung (36) vor dem Folienschlauchvorrat (46), benachbart zu dem Folienschlauch (30) oder dem Folienband (12) angeordnet und eingerichtet ist, Strukturen auf der Oberfläche des Folienbandes (12) oder Folienschlauches (30) berührungsfrei abzutasten.

8. Vorrichtung nach Anspruch 7,
**dadurch gekennzeichnet, dass** der erste Sensor ein optischer Sensor ist.

9. Vorrichtung nach Anspruch 2,
**dadurch gekennzeichnet, dass** der zweite Sensor (48) in Höhe des Rückhalterings (44) angeordnet ist.

10. Vorrichtung nach Anspruch 1, 2 oder 9,
**dadurch gekennzeichnet, dass** der zweite Sensor (48) eine in Füllausstoßrichtung (36) hinter dem Folienschlauchvorrat (46) entlang des Füllrohrs (32) an dem Folienschlauch (30) anliegende Rolle und einen Drehwinkelmesser aufweist, der eingerichtet ist die Drehung der anliegenden Rolle zu erfassen.

11. Vorrichtung nach Anspruch 1, 2 oder 9,
**dadurch gekennzeichnet, dass** der zweite Sensor (48) in Füllausstoßrichtung (36) hinter dem Folienschlauchvorrat (46), benachbart zu dem Folienschlauch (30) angeordnet und eingerichtet ist, Strukturen auf der Oberfläche des Folienschlauches (30) berührungsfrei abzutasten.

12. Vorrichtung nach Anspruch 11,
**dadurch gekennzeichnet, dass** der zweite Sensor (48) ein optischer Sensor ist.

## Claims

1. Apparatus for producing film tube which can be filled with liquid, viscous or granular filling material, from a film strip (12), comprising a filling tube (32) which can be connected to a filling machine, a transformation device surrounding the filling tube (32) for transforming the film strip into a film tube (30), a sealing device (34) arranged downstream of the transformation device in the filling expulsion direction (36) for sealing longitudinal edges of the film strip (12), which are adjacent after the transformation operation, an advance drive means (40) for the film tube (30) and a measuring device for determining a supply (46) of film tube (30) delivered by the sealing device (34)
**characterised in that** the measuring device includes a first sensor which detects the length of the film tube (30) delivered by the sealing device (34) to the film tube supply (46) and a second sensor (48) which detects the length of the film tube (30) drawn off from the film tube supply (46) in the filling expulsion direction (36).

2. Apparatus according to claim 1 **characterised in that** a retaining ring (44) is arranged on the filling tube in the filling expulsion direction (36) downstream of the advance drive means (40) and is so adapted that the film tube supply (46) which is built up between the advance drive means (40) and the retaining ring (44) is restrained when the film tube (30) is drawn off in the film expulsion direction (36).

3. Apparatus according to claim 1 or claim 2 **characterised in that** the first sensor has a roller (28) bearing against the film tube (30) or the film strip (12) upstream of the film tube supply (46) in the filling expulsion direction (36), and a rotary angle pickup which is adapted to detect the rotation of the roller (28) bearing against the film tube or the film strip.

4. Apparatus according to claim 1 or claim 2 **characterised in that** the first sensor has a rotary angle pickup which is adapted to detect the rotation of a roll (10) supplying the film strip (12).

5. Apparatus according to claim 1 or claim 2 **characterised in that** the first sensor has a rotary angle pickup which is adapted to detect the rotation of a roller (14, 16, 18, 20, 22, 24) which changes the direction of the film strip (12).

6. Apparatus according to claim 1 or claim 2 **characterised in that** the first sensor has a rotary angle pickup which is adapted to detect an advance travel of the advance drive means (40).

7. Apparatus according to claim 1 or claim 2 **characterised in that** the first sensor is arranged upstream of the film tube supply (46) in the filling expulsion direction (36) in adjacent relationship with the film tube (30) or the film strip (12) and is adapted to contact-free sense structures on the surface of the film strip (12) or the film tube (30).

8. Apparatus according to claim 7 **characterised in that** the first sensor is an optical sensor.

9. Apparatus according to claim 2 **characterised in that** the second sensor (48) is arranged at the level of the retaining ring (44).

10. Apparatus according to claim 1, claim 2 or claim 9 **characterised in that** the second sensor (48) has a roller which bears against the film tube (30) downstream of the film tube supply (46) in the filling expulsion direction (36) along the filling tube (32) and a rotary angle measuring means which is adapted to detect the rotation of the roller bearing against the film tube.

11. Apparatus according to claim 1, claim 2 or claim 9 **characterised in that** the second sensor (48) is arranged downstream of the film tube supply (46) in the filling expulsion direction (36) in adjacent relationship with the film tube (30) and is adapted to contact-free sense structures on the surface of the film tube (30).

12. Apparatus according to claim 11 **characterised in that** the second sensor (48) is an optical sensor.

## Revendications

1. Dispositif pour fabriquer à partir d'une bande en feuille (12) un boyau en feuille qui peut être rempli d'un produit à embosser liquide, visqueux ou granulaire, comportant un tube d'embossage (32) qui peut être raccordé à une machine d'embossage, un dispositif de déformation qui entoure le tube d'embossage (32) et qui sert à déformer la bande en feuille pour obtenir un boyau en feuille (30), un dispositif de scellage (34) placé en aval du dispositif de déformation dans le sens (36) où le produit à embosser est refoulé et destiné à sceller des bords longitudinaux de la bande en feuille (12) et voisins après la déformation, un mécanisme d'avance (40) pour le boyau en feuille (30) et un dispositif de mesure pour déterminer une réserve (46) du boyau en feuille (30) remis par le dispositif de scellage (34),
**caractérisé en ce que** le dispositif de mesure comprend un premier capteur qui détecte la longueur du boyau en feuille (30) remis à la réserve (46) de boyau en feuille par le dispositif de scellage (34) et un deuxième capteur (48) qui détecte la longueur du boyau en feuille (30) tiré de la réserve de boyau en feuille (46) dans le sens (36) où le produit à embosser est refoulé.

2. Dispositif selon la revendication 1, **caractérisé en ce qu'**une bague de retenue (44) est placée en aval du mécanisme d'avance (40) sur le tube d'embossage dans le sens (36) où le produit à embosser est refoulé et elle est conçue de sorte que la réserve de boyau en feuille (46) accumulée entre le mécanisme d'avance (40) et la bague de retenue (44) est maintenue en arrière quand le boyau en feuille (30) est tiré dans le sens (36) où le produit à embosser est refoulé.

3. Dispositif selon la revendication 1 ou 2, **caractérisé en ce que** le premier capteur comporte un rouleau (28) appliqué au boyau en feuille (30) ou à la bande en feuille (12) en amont de la réserve de boyau en feuille (46) dans le sens (36) où le produit à embosser est refoulé ainsi qu'un détecteur d'angle de rotation conçu pour détecter la rotation du rouleau (28) appliqué.

4. Dispositif selon la revendication 1 ou 2, **caractérisé en ce que** le premier capteur comporte un détecteur d'angle de rotation conçu pour détecter la rotation d'un rouleau (10) qui fournit la bande en feuille (12).

5. Dispositif selon la revendication 1 ou 2, **caractérisé en ce que** le premier capteur comporte un détecteur d'angle de rotation conçu pour détecter la rotation d'un rouleau (14, 16, 18, 20, 22, 24) qui dévie la bande en feuille (12).

6. Dispositif selon la revendication 1 ou 2, **caractérisé en ce que** le premier capteur comporte un détecteur d'angle de rotation conçu pour détecter l'avance du mécanisme d'avance (40).

7. Dispositif selon la revendication 1 ou 2, **caractérisé en ce que**, en direction (36) où le produit à embosser est refoulé, le premier capteur est placé en amont de la réserve de boyau en feuille (46), au voisinage du boyau en feuille (30) ou de la bande en feuille (12), et est conçu pour balayer sans contact des structures sur la surface de la bande en feuille (12) ou du boyau en feuille (30).

8. Dispositif selon la revendication 7, **caractérisé en ce que** le premier capteur est un capteur optique.

9. Dispositif selon la revendication 2, **caractérisé en ce que** le deuxième capteur (48) est placé au niveau de la bague de retenue (44).

10. Dispositif selon la revendication 1, 2 ou 9, **caractérisé en ce que** le deuxième capteur (48) comporte un rouleau (28) appliqué au boyau en feuille (30) en aval de la réserve de boyau en feuille (46) dans le sens (36) où le produit à embosser est refoulé, le long du tube d'embossage (32), ainsi qu'un détecteur d'angle de rotation conçu pour détecter la rotation du rouleau (28) appliqué.

11. Dispositif selon la revendication 1, 2 ou 9, **caractérisé en ce que** le deuxième capteur (48) est placé en aval de la réserve de boyau en feuille (46) dans le sens (36) où le produit à embosser est refoulé, au voisinage du boyau en feuille (30), et est conçu pour balayer sans contact des structures sur la surface du boyau en feuille (30).

12. Dispositif selon la revendication 11, **caractérisé en ce que** le deuxième capteur est un capteur optique.
